(19) Europäisches Patentamt

European Patent Office

Office européen des brevets

(11) **EP 1 293 817 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
*G02B 21/00* (2006.01)   *G02B 21/24* (2006.01)
*G02B 21/16* (2006.01)   *G02B 26/08* (2006.01)

(21) Anmeldenummer: **02020204.0**

(22) Anmeldetag: **10.09.2002**

(54) **Vorrichtung und Verfahren zur Fokuskontrolle in einem Mikroskop mit digitaler Bildgebung, vorzugsweise einem konfokalen Mikroskop**

Apparatus and method for focus control of a microscope with digital imaging, in particular a confocal microscope

Dispositif et méthode de contôle de mise au point d'un microscope à imagerie numérique, en particulier un microscope confocal

(84) Benannte Vertragsstaaten:
**AT BE BG CH CY CZ DE DK EE ES FI FR GB GR IE IT LI LU MC NL PT SE SK TR**

(30) Priorität: **13.09.2001 DE 10145056**

(43) Veröffentlichungstag der Anmeldung:
**19.03.2003 Patentblatt 2003/12**

(73) Patentinhaber: **CARL ZEISS JENA GmbH**
**07745 Jena (DE)**

(72) Erfinder: **Schöppe, Günter**
**07751 Kunitz (DE)**

(74) Vertreter: **Hampe, Holger**
**Carl Zeiss Jena GmbH,**
**Zentralbereich Recht und Patente,**
**Patentabteilung**
**07745 Jena (DE)**

(56) Entgegenhaltungen:
**GB-A- 2 284 681**      **US-A- 4 745 271**
**US-A- 5 604 344**      **US-A- 5 932 872**

- **PATENT ABSTRACTS OF JAPAN vol. 1999, no. 09, 30. Juli 1999 (1999-07-30) & JP 11 095091 A (OLYMPUS OPTICAL CO LTD), 9. April 1999 (1999-04-09)**
- **PATENT ABSTRACTS OF JAPAN vol. 014, no. 574 (P-1145), 20. Dezember 1990 (1990-12-20) & JP 02 247605 A (SATOSHI KAWADA;OTHERS: 01), 3. Oktober 1990 (1990-10-03)**

## Beschreibung

Die vorliegende Erfindung betrifft eine Vorrichtung und ein Verfahren mit dessen Hilfe die Fokuseinstellung in Mikroskopen mit digitaler Bildgebung, vorzugsweise in konfokalen Mikroskopen kontrolliert und verfolgt werden kann.
Nach dem bekannten Stand der Technik sind verschiedene Lösungen zur Bestimmung und Verfolgung der optimalen Fokusebene bei Mikroskopen bekannt.

Eine Methode zur Ermittlung der optimalen Fokusebene sieht die Auswertung der vom Objekt reflektierten Strahlung vor. Die optimale Fokuslage ist bei maximaler Intensität der reflektierten Strahlung erreicht. Nach WO 00/08415 wird dazu eine Vielzahl von Lichtspots mit unterschiedlichen Fokusebenen generiert. Auch die in der GB 2 321 517 beschrieben Vorrichtung für Konfokalmikroskope sieht die Auswertung der vom Objekt reflektierten Strahlung zur Detektion der optimalen Fokuslage vor. Der Nachteil dieser Lösungen liegt in der mitunter doch sehr zeitaufwendigen Ermittlung der tatsächlich optimalen Fokusebene. Es sind dazu eine Reihe von Messungen erforderlich, weil die Bestimmung des Wertes der optimalen Fokuslage nur durch Annäherung erfolgen kann.

Weiterhin sind im Stand der Technik Lösungen bekannt, die zur Autofokussion Licht aus einem Spektralbereich nutzen, welches nicht zur Untersuchung verwendet wird. Ein Beispiel hierfür ist das IR-Autofokussystem. Für Lösungen, die für das IR-Autofokussystem die Nutzung der Hauptoptik vorsehen, besteht dabei der wesentliche Nachteil darin, dass die Hauptoptik für einen sehr breiten Spektralbereich, unter Umständen vom DUV-Bereich (deep ultraviolet) bis in den IR-Bereich, nutzbar sein muss. Ein dafür geeignetes Objektiv, wie es in der DE 199 31 949 beschrieben wird, ist nur mit einem hohen technischen Fertigungsaufwand zu realisieren.

Eine Lösung bei der das Autofokus-System eine separate Optik und nicht das Hauptoptik-System nutzt, ist in der DE 199 19 804 beschrieben. Diese Lösung sieht für die Fokuskontrolle die Verwendung einer sekundären Laserquelle vor. Durch die zusätzliche Anordnung zur Fokuskontrolle wird die Gesamtanordnung wesentlich umfangreicher und komplizierter. Außerdem wirkt sich nachteilig aus, dass die optimale Fokusebene bekannt sein muss, da das Autofokus-System lediglich einen Vergleich der momentanen zur idealen Strahlauslenkung durchführt.

Auch bei der in WO 99/03011 beschriebenen Lösung wird der technische Aufwand durch die zusätzlich erforderlichen optischen Elemente zur Fokuskontrolle erheblich erhöht. Hierbei erfolgt die Fokuskontrolle durch den bei Defokussierung erzeugten Strahlenversatz durch mehrfache Reflexion an unterschiedlichen optischen Flächen.
Die nach dem Stand der Technik bekannten technischen Lösungen haben die Nachteile, dass die erforderliche zusätzliche Lichtquelle eine kompliziertere technische Anordnung zur Folge hat, dass eine Vielzahl von Messungen erforderlich sind und/oder dass eine Fokuskontrolle meist nur bei reflektierenden Objekten möglich ist.
JP11095091 A beschreibt eine Vorrichtung zur Fokuskontrolle in einem Mikroskop mit digitaler Bildgebung bei dem vor einem im Strahlengang angeordneten Hauptstrahlteiler (6) ein paralleler Beleuchtungsstrahlengang (3) vorhanden ist und im Bereich dieses parallelen Beleuchtungsstrahlengangs (3) vor dem Hauptstrahllieiler (6) ein transparentes optisches Bauelement (4) mit parallel zueinander legenden Strahleintritts und Strahlaustrittsflächen angeordnet ist
Der vorliegenden Erfindung liegt die Aufgabe zugrunde ein Verfahren und eine zu dessen Durchführung geeignete Vorrichtung zur Fokuskontrolle in Mikroskopen mit digitaler Bildgebung, vorzugsweise in konfokalen Mikroskopen zu entwickeln, ohne dass der Aufbau der Mikroskope wesentlich komplizierter wird und bei dem nach Möglichkeit die vorhandenen Beleuchtungs- und Bildauswerteeinrichtungen zur Kontrolle der Fokusebene verwendet werden können. Die Fokuskontrolle soll dabei unabhängig vom zu untersuchenden Objekt (transparent, reflektierend oder fluoreszierend) anwendbar sein.

Des weiteren soll die Kontrolle der Fokusebene zwischen den normalen Arbeitsvorgängen ohne Änderungen des Aufbaus sehr schnell und einfach ermöglicht werden.
Erfindungsgemäß wird die Aufgabe mit der Vorrichtung und dem Verfahren zur Fokuskontrolle dadurch gelöst,

- daß die Mittelsenkrechte der Strahleintrittsfläche des transparenten optischen Bauelementes (4) paralle zum Schwerstrahl des Beleuchtungslichtes (3) liegt,
- daß dieses transparente optische Bauelement (4) drehbar gelagert ist und die Mittelsenkrechte der Strahleintrittsfläche bei Verdrehung ein Winkel $\alpha$ mit dem Schwerstrahl des Beleuchtungslichtes einschließt,
- daß die Drehachse (5) dieses transparenten optischen Bauelementes (4) bezogen auf die Probe vorzugsweise so liegt, daß bei Verdrehung eine Verschiebungdes Strahlenbündels in Hauptscan- oder Hauptbildrichtung erfolgt und
- daß eine zentrale Steuer- und Auswerteeinheit zur Steuerung des transparenten optischen Bauelementes, zur Bearbeitung der aufgenommenen Bilder, zur Erfassung aller Ausgangsdaten, sowie zur Berechnung und Auswertung der Ergebnisse vorhanden ist.

Die für die Fokuskontrolle erforderlichen Bilder werden bei einem hohen Zoom und bei einem Pinhole mit einer Öffnung größer als ein Airy aufgenommen. Ein erstes Bild wird bei einer um den Winkel $+\alpha$ und ein zweites Bild bei einer um den Winkel $-\alpha$ geneigten Planplatte aufgenommen. Beide Bilder werden in Richtung der Strahlverschiebung durch pixelweises Verschieben auf Korrelation der Bildinhalte überprüft. Die ermittelte Verschiebung Δs bei optimaler Korrelation stellt ein Maß für die momentane Fokussierung bzw. Defokussierung dar. Für eine Verschiebung Δs≠ 0 liegt Defokussierung um eine zu △s proportionale Strecke vor.

Das vorgeschlagene Verfahren und die zur Durchführung vorgesehene Vorrichtung zur Fokuskontrolle ist mit geringfügigen Anpassungen für alle Mikroskope, die mit digital bildgebenden Verfahren und Anordnungen ausgerüstet sind, anwendbar. In konfokalen Mikroskopen ist die Anwendbarkeit auf Defokussierungen in einem Tiefenbereich von ca. 5 bis 8 x $\lambda$/NA$^2$ begrenzt.

Die Erfindung wird nachfolgend anhand zweier Ausführungsbeispiele beschrieben. Dazu zeigen

Figur 1: den schematischen Aufbau eines konfokalen Laserscan-Mikroskops mit der erfindungsgemäßen Vorrichtung,

Figur 2: die schematische Darstellung der erfindungsgemäßen Verfahrensschritte,

Figur 3: die Bildinhalte der zu vergleichenden Bilder bei einer Verschiebung um -3 Pixel,

Figur 4: die Bildinhalte der zu vergleichenden Bilder bei einer Verschiebung um 0 Pixel,

Figur 5: die Bildinhalte der zu vergleichenden Bilder bei einer Verschiebung um +3 Pixel, mit dem Verlauf der Fehlersumme und

Figur 6: den schematischen Aufbau eines Mikroskops mit einer CCD-Matrix und der erfindungsgemäßen Vorrichtung.

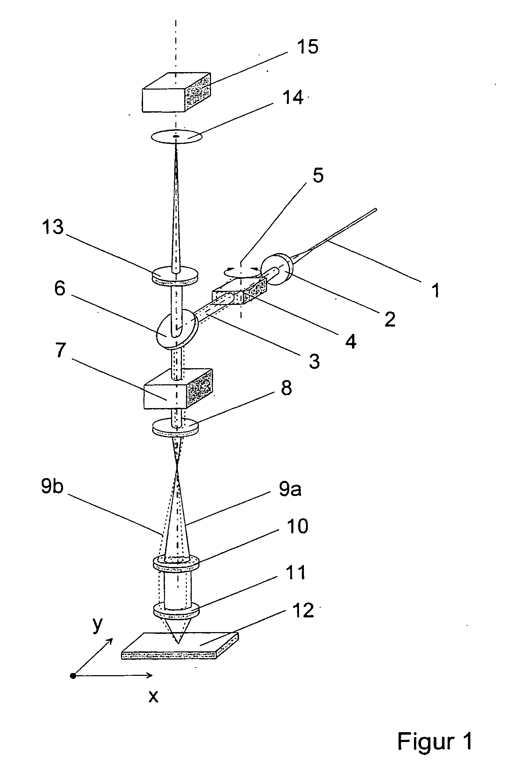

Bei der in **Figur 1** dargestellten Vorrichtung zur Fokuskontrolle in einem konfokalen Laserscan-Mikroskop gelangt das, von dem als Beleuchtungsquelle dienendem Laser, ausgehende Beleuchtungslicht **1** über einen Kollimator **2**, einen als dichroitischer Teiler ausgebildeten Hauptstrahlteiler **6**, eine Scaneinheit **7**, ein Scanobjektiv **8**, eine Tubuslinse **10** und ein Objektiv **11** auf die Probe **12**. Die von der Probe **12** reflektierte Strahlung gelangt über das Objektiv **11,** die Tubuslinse **10,** das Scanobjektiv **8**, die Scaneinheit **7**, den Hauptstrahlteiler **6**, das Pinholeobjektiv **13** und das Pinehole **14** auf den Detektor **15**. Zusätzlich zu dieser Anordnung eines bekannten konfokalen Mikroskops wird im Bereich des parallelen Beleuchtungsstrahlenganges **3** vor dem Hauptstrahlteiler **6** ein transparentes optisches Bauelement **4** mit zueinander parallel liegenden Strahleintritts- und Strahlaustrittsflächen so angeordnet, dass die Mittelsenkrechte der Strahleintrittsfläche parallel zum Schwerstrahl des Beleuchtungslichtes **1** liegt. Diese Stellung wird im weiteren als Grundstellung bezeichnet. Das transparente optische Bauelement **4** hat beispielsweise die Form einer Planplatte oder eines Würfels mit einer Kantenlänge von 10mm und ist über einen zentral gesteuerten Motor, vorzugsweise einen Schrittmotor, drehbar. Bei Verdrehung schließt die Mittelsenkrechte der Strahleintrittsfläche einen Winkel $\alpha$ mit dem Schwerstrahl des Beleuchtungslichtes **1** ein. Die Drehachse **5** des transparenten optischen Bauelementes **4** liegt bezogen auf die Probe **12** vorzugsweise so (in Richtung der y-Achse), dass bei Verdrehung um den Winkel $\alpha$ eine Verschiebung des Strahlenbündels in der Hauptscanrichtung (x-Achse) der Scaneinheit **7** erfolgt. Das Strahlenbündel wird somit aus der Position **9a** in die Position **9b** verschoben. Von einer zentralen Steuer- und Auswerteeinheit (nicht dargestellt) wird die Steuerung des transparenten optischen Bauelementes **4**, die Bearbeitung der aufgenommenen Bilder, die Erfassung aller Ausgangsdaten, sowie die Berechnung und Auswertung der Ergebnisse übernommen.

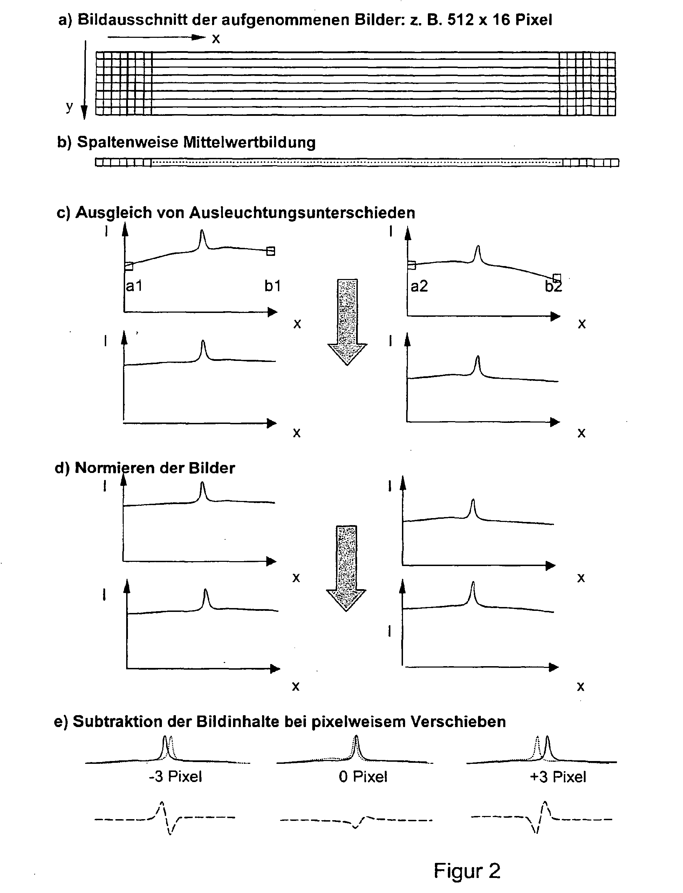

Bei dem erfindungsgemäßen Verfahren zur Fokuskontrolle in einem konfokalen Laserscan-Mikroskop beinhaltet der Bildausschnitt die interessierenden Objektdaten. Die einzelnen Verfahrensschritte werden anhand der **Figur 2** beschrieben. Für das Verfahren genügt ein Bildausschnitt mit ca. 16 Zeilen und 512 Spalten. Siehe dazu **a)** in **Figur 2**. Die für die Fokuskontrolle erforderlichen Bilder werden bei einem hohen Zoom und einem auf ca. 4 bis 5 Airy geöffnetem Pinhole **14** aufgenommen. Ein hohes Zoom bedeutet, dass ein kleinerer Objektbereich in dem gewählten Bildausschnitt von 512x16 Pixeln abgebildet wird. Bei einem Laserscann-Mikroskop wird dies realisiert indem der Abtastwinkel der Scaneinheit **7** verkleinert wird und zwar so weit, dass die Bildlänge in der Zwischenbildebene ca. 1mm beträgt. Während der normalen Bildverarbeitung bleibt das transparente optische Bauelement **4** in seiner Grundstellung und wird nicht verdreht, d. h. die Mittelsenkrechte der Strahleintrittsfläche liegt parallel zum Schwerstrahl des Beleuchtungslichtes **1**. Für die Fokuskontrolle wird das transparente optische Bauelement **4** verdreht, so dass die Mittelsenkrechte der Strahleintrittsfläche einen Winkel $\alpha$ mit dem Schwerstrahl des Beleuchtungslichtes **1** einschließt.

Ein erstes Bild wird bei einem um den Winkel $\alpha_1 \approx +20°$ und ein zweites Bild bei einem um den Winkel $\alpha_2 \approx$ -20° verdrehten transparenten optischen Bauelement **4** aufgenommen. Zur Unterdrückung von Drifteinflüssen wird zusätzlich ein drittes Bild, wieder bei einem um den Winkel $\alpha_1 \approx +20°$ verdrehten transparenten optischen Bauelement **4** aufgenommen. Als Bedingung für die zu aufgenommenen Bilder gilt: $\alpha_1$ = - $\alpha_2$.

Von der zentralen Steuer- und Auswerteeinheit wird der aus dem ersten und dritten Bild ermittelte spaltenweise Mittelwert mit dem zweiten Bild in Richtung der Strahlverschiebung durch pixelweises Verschieben auf Korrelation der Bildinhalte überprüft.

Im Schritt **b)** nach **Figur 2** wird die Datenmenge der beiden zu vergleichenden Bildausschnitte durch spaltenweise Mittelwertbildung reduziert (von 512x16 auf 512x1 Pixel). Im anschließenden Schritt **c)** werden die Ausleuchtungsunterschiede zwischen rechtem und linkem Bildrand unter Anwendung eines Tiefpasses von ca. 10 - 15 Pixel mathematisch durch eine Shadingkorrektur ausgeglichen. Dies erfolgt durch Berechnen und Ausgleichen des Anstieges der Intensitätsfunktionen beider Bilder. In Abhängigkeit davon ob das Maximum bei $a_n$ oder $b_n$ liegt, ändert sich die Formel für die Ermittlung des Anstieges:

$$A = \frac{b_n - a_n}{b_n}$$

oder

$$A = \frac{a_n - b_n}{a_n}$$

Die Berechnung erfolgt für die beiden zu vergleichenden Bilder. Im Ergebnis weisen die Bildinhalte den gleichen Anstieg auf und ihre Ausleuchtungsunterschiede sind somit ausgeglichen. In diesen korrigierten Bildern werden dann die minimale und maximale Helligkeit ermittelt und die Bilder damit normiert. Dazu werden nach Schritt **d)** die Werte aller Pixel eines jeden Bildes aufsummiert ($\Sigma_1$ und $\Sigma_2$). Im Anschluss wird jedes Pixel des ersten Bildes mit dem Faktor ($256*512/\Sigma1$) und jedes Pixel des zweiten Bildes mit dem Faktor ($256*512 / \Sigma_2$) multipliziert. Die Zahl 256 ist hierbei der Normierungsfaktor und 512 ist die Zahl der Pixel eines Bildes. Durch diesen Verfahrensschritt werden die vorhandenen Helligkeitsunterschiede ausgeglichen. Die Inhalte dieser ausleuchtungskorrigierten und normierten Bilder werden miteinander durch pixelweise Verschiebung in Spaltenrichtung verglichen und die Differenzen quadratisch für jede Verschiebung aufsummiert, bis die Verschiebung gefunden ist, bei der die Summe der Differenzen ein Minimum ist. Im Schritt **e)** nach **Figur 2** liegt dieses Minimum bei einer Verschiebung von etwa 0 Pixel. Aus dem Verlauf der Fehlersumme kann der Ort bester Übereinstimmung auf Subpixel genau interpoliert werden. Die pixelweise Subtraktion der zu vergleichenden Bilder sollte für Verschiebungen $\Delta$s in einem Bereich bis maximal 10 Pixel in jede Richtung erfolgen.

Die Größe der Verschiebung $\Delta$s ist bei gegebenem Geräteaufbau abhängig von dem verwendeten Objektiv, von der Probe (reflektierend oder transparent) und in geringem Maße von der Wellenlänge sowie dem Justierzustand des Gerätes.

Bis auf den Justierzustand sind alle Faktoren konstruktiv festliegend und lassen sich an hochwertigen Mikroskopen durch Abfrage der eingestellten Konfiguration ermitteln oder können durch Kalibrierung bestimmt werden. Der im Ergebnis ermittelte Wert für die Verschiebung $\Delta$s der beiden Bilder ist somit dem Betrag der Abweichung $\Delta$z von der optimalen Fokusebene proportional und kann berechnet werden.

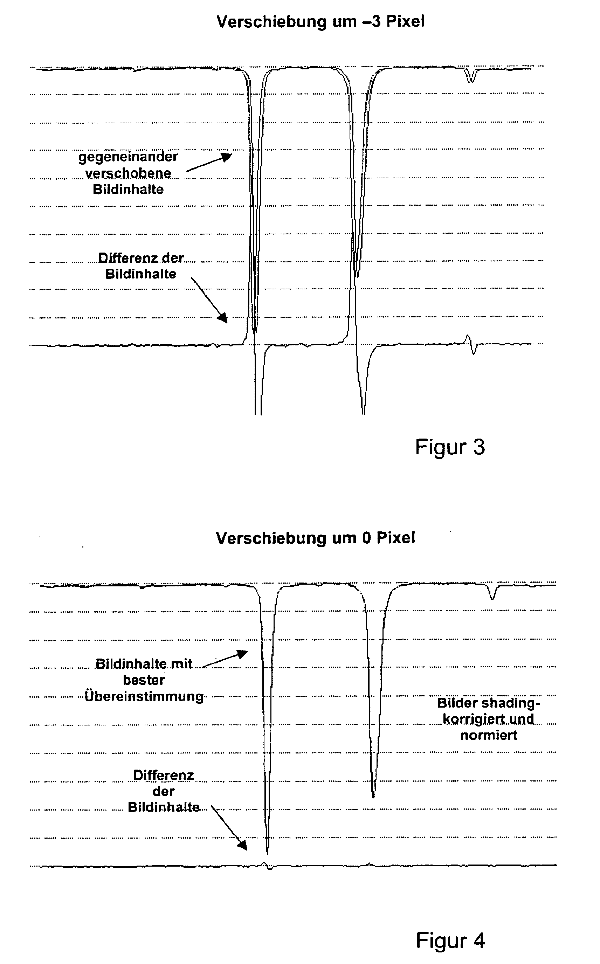

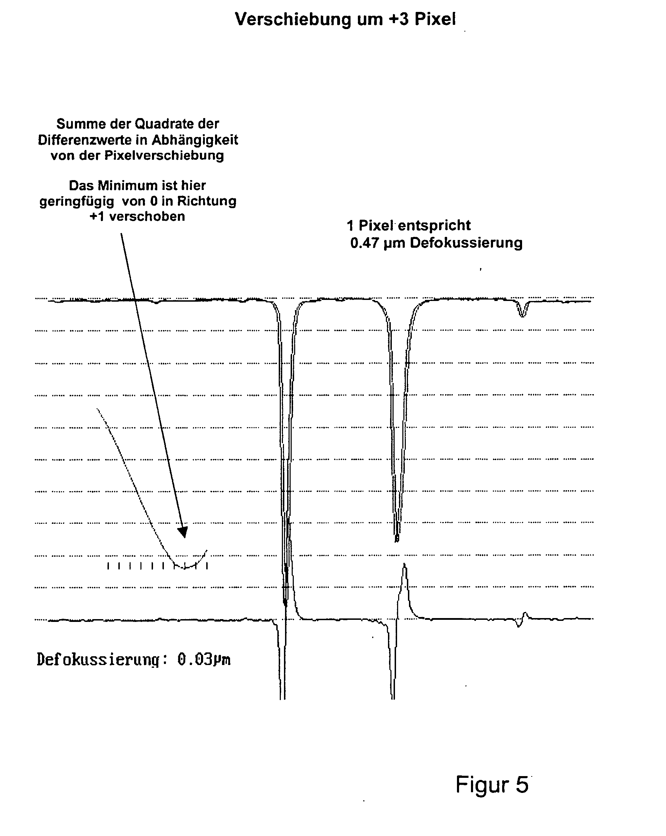

Bei einer, wie im Beispiel nach **Figur 4** dargestellten, Verschiebung beider Bilder von $\Delta$s=0 liegt die optimale Fokussierung vor. Im Gegensatz dazu liegt bei einer Verschiebung beider Bilder von $\Delta$s≠0 eine Defokussierung um eine zu $\Delta$s proportionalen Strecke vor. **Figur 3** und **Figur 5** zeigen beispielhaft Verschiebungen $\Delta$s um +3 Pixel bzw. -3 Pixel.

Um das Verfahren zu beschleunigen ist es vorteilhaft, dass vor dem Ausgleichen der Ausleuchtungs- und Helligkeitsunterschiede von den Bildinhalten der zu vergleichenden Bilder spaltenweise Mittelwerte gebildet werden. Somit brauchen in den weiteren Verfahrensschritten nur noch Bildausschnitte der Größe 512x1 Pixel verarbeitet zu werden. Die Genauigkeit des Verfahrens zur Fokuskontrolle in einem Mikroskop wird davon nicht beeinträchtigt.

Weiterhin ist das erfindungsgemäße Verfahren zur Fokuskontrolle auch anwendbar, wenn es bei Verdrehung des transparenten optischen Bauelementes **4** zu einer Verschiebung des Strahlenbündels aus der Position **9a** in die Position **9b** in einem Winkel β zur Hauptscan- oder Hauptbildrichtung führt. Dabei erfolgt die Überprüfung auf Korrelation der Bildinhalte in Richtung der Strahlverschiebung ebenfalls durch pixelweises Verschieben, allerdings getrennt in Richtung der Hauptscan- oder Hauptbildrichtung (x-Achse) und in der dazu senkrechten Richtung der Bildebene (y-Achse). Der Ausgleich der Ausleuchtungs- und Helligkeitsunterschiede als auch die pixelweise Subtraktion für jede in Pixelschritten erfolgte Verschiebung $\Delta$s erfolgt ebenfalls getrennt in Richtung der x-Achse und der y-Achse. Die Ermittlung der resultierenden Verschiebung $\Delta$s$_{Res}$ in Richtung des Winkel β wird mit Hilfe der Ergebnisse der in den beiden Richtungen bestimmten Verschiebung $\Delta$s unter Anwendung des Satzes des Pythagoras ermittelt.

Aus der Verschiebung $\Delta$s, die aus der Fehlersumme auf Subpixel genau interpoliert werden kann, wird unter Berücksichtigung der gegebenen Ausgangswerte ein Wert für die Abweichung $\Delta$z von der optimalen Fokusebene bestimmt.

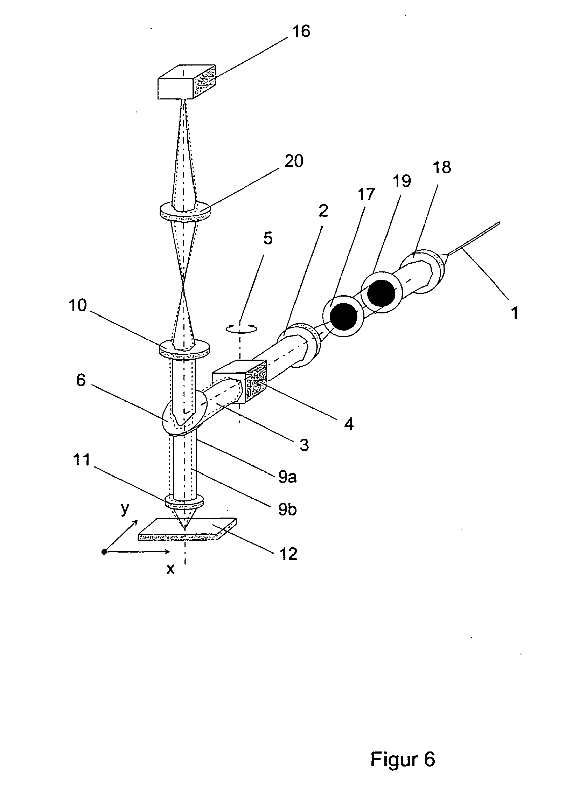

Bei der in **Figur 6** dargestellten Vorrichtung zur Fokuskontrolle in einem Mikroskop mit CCD-Matrix **16** gelangt das Beleuchtungslicht **1** über eine Linse **18,** eine Aperturblende **19,** eine Leuchtfeldblende **17,** einen Kollimator **2,** einen intensitätsmäßig oder spektral teildurchlässigen Strahlteiler **6**, ein Objektiv **11** auf die Probe **12.** Die von der Probe **12** reflektierte Strahlung gelangt über das Objektiv **11,** den Strahlteiler **6,** die Tubuslinse **10** und ein vorzugsweise vorhandenes Zoom-System **20** auf die CCD-Matrix **16.** Als Beleuchtungsquelle ist dabei eine Licht- oder Laserquelle einsetzbar. Zusätzlich zu dieser bekannten Anordnung wird im Bereich des parallelen Beleuchtungsstrahlenganges **3** vor dem Strahlteiler **6** ein transparentes optisches Bauelement **4** so angeordnet, dass die Mittelsenkrechte der Strahleintrittsfläche parallel zum Schwerstrahl des Beleuchtungslichtes **1** liegt. Das transparente optische Bauelement **4** hat die Form eines Quaders oder eines Zylinders mit einer Dicke von 10 bis 25 mm in Richtung des Beleuchtungslichtes **1** und ist über einen zentral gesteuerten Motor, vorzugsweise einen Schrittmotor, drehbar. Bei Verdrehung schließt die Mittelsenkrechte der Strahleintrittsfläche mit dem Schwerstrahl des Beleuchtungslichtes **1** einen Winkel α ein. Die Drehachse **5** des transparenten optischen Bauelementes **4** liegt bezogen auf die Probe **12** vorzugsweise so, dass bei Verdrehung eine Verschiebung des Strahlenbündels (**9a** nach **9b**) in Hauptscanbildrichtung erfolgt. Die Drehachse **5** ist damit bezogen auf die CCD-Matrix **16** in y-Richtung orientiert. Das Strahlenbündel wird dadurch aus der Position **9a** in die Position **9b** verschoben. Von einer zentralen Steuer- und Auswerteeinheit (nicht dargestellt) wird die Steuerung des transparenten optischen Bauelementes **4**, die Bearbeitung der aufgenommenen Bilder, die Erfassung aller Ausgangsdaten, sowie die Berechnung und Auswertung der Ergebnisse übernommen.

Bei dem Verfahren zur Fokuskontrolle beinhaltet der Bildausschnitt von ca. 16 Zeilen und 512 Spalten die interessierenden Objektdaten. Die erforderlichen Bilder werden bei einem hohen Zoom aufgenommen. Ein hohes Zoom bedeutet, dass ein kleinerer Objektbereich in den gewählten Bildausschnitt von 512x16 Pixeln abgebildet wird. Bei einem Mikroskop mit einer CCD-Matrix wird dies durch ein optisches Zoom realisiert. Das Zoom-System **20** kann dabei entfallen, wenn die Brennweite der Tubuslinse **10** genügend groß gewählt wird.

Während der normalen Bildverarbeitung wird das transparente optische Bauelement **4** nicht verdreht, d. h. die Mittelsenkrechte der Strahleintrittsfläche liegt parallel zum Schwerstrahl des Beleuchtungslichtes **1**. Für die Fokuskontrolle wird das transparente optische Bauelement **4** verdreht, so dass die Mittelsenkrechte der Strahleintrittsfläche einen Winkel α mit dem Schwerstrahl des Beleuchtungslichtes **1** einschließt.

Ein erstes Bild wird bei einem um den Winkel $\alpha_1 \approx +20°$ und ein zweites Bild bei einem um den Winkel $\alpha_2 \approx -20°$ verdrehten transparenten optischen Bauelement **4** aufgenommen. Zur Unterdrückung von Drifteinflüssen wird zusätzlich ein drittes Bild wieder bei einem um den Winkel $\alpha_1 \approx +20°$ verdrehten transparenten optischen Bauelement **4** aufgenommen. Als Bedingung für die zu aufgenommenen Bilder gilt: $\alpha_1 = -\alpha_2$.

Von der zentralen Steuer- und Auswerteeinheit wird der aus dem ersten und dritten Bild ermittelte spaltenweise Mittelwert mit dem zweiten Bild in Richtung der Strahlverschiebung durch pixelweises verschieben auf Korrelation der Bildinhalte überprüft. Der, entsprechend der Beschreibung zur **Figur 1**, ermittelte Wert für die Verschiebung Δs der beiden Bilder ist somit dem Betrag der Abweichung Δz von der optimalen Fokusebene proportional und kann ebenfalls berechnet werden.

Mit der erfindungsgemäßen Anordnung kann eine Fokuskontrolle sehr schnell und einfach, auch zwischen den normalen Arbeitsvorgängen realisiert werden. Eine Änderung der Beleuchtungs- oder Auswerteeinrichtung ist dabei nicht erforderlich. Durch die Auswertung von vorzugsweise drei Bildern ist auch die Kontrolle einer zuvor erfolgten Nachfokussierung ohne großen Zeitaufwand zu jeder Zeit möglich.

Die Empfindlichkeit des Verfahrens ist von der Ausrichtung der Strukturen der zu untersuchenden Probe abhängig und ist bei Strukturen die senkrecht zur Hauptscan- oder Hauptbildrichtung verlaufen maximal, bei punktförmigen Strukturen sehr gut und bei Strukturen die in der Hauptscan- oder Hauptbildrichtung verlaufen minimal.

**Patentansprüche**

1. Vorrichtung zur Fokuskontrolle in einem Mikroskop mit digitaler Bildgebung, bei dem vor einem, im Strahlengang angeordneten Hauptstrahlteiler (6) ein paralleler Beleuchtungsstrahlengang (3) vorhanden ist und im Bereich dieses parallelen Beleuchtungsstrahlengangs (3) vor dem Hauptstrahlteiler (6) ein transparentes optisches Bauelement (4) mit parallel zueinander liegenden Strahleintritts- und Strahlaustrittsflächen angeordnet ist **dadurch gekennzeichnet,**

   - **daß** die Mittelsenkrechte der Strahleintrittsfläche des transparenten optischen Bauelementes (4) parallel zum Schwerstrahl des Beleuchtungslichtes (3) liegt
   - daß dieses transparente optische Bauelement (4) drehbar gelagert ist und die Mtttetsiehkrechte der Strahleintrittsfläche bei Verdrehung ein Winkel α mit dem Schwerstrahl des Beleuchtungslichtes einschließt,
   - **daß** die Drehachse (5) dieses transparenten optischen Bauelementes (4) bezogen auf die Probe vorzugsweise so liegt, daß bei Verdrehung eine Verschiebung des Strahlenbündels in Hauptscan- oder Haupibildrichtung erfolgt und
   - daß eine zentrale Steuer- und Auswerteeinheit zur Steuerung des transparenten optischen Bauelementes, zur Bearbeitung der aufgenommenen Bilder, zur Erfassung aller Ausgangsdaten, sowie zur Berechnung und Auswertung der Ergebnisse vorhanden ist.

2. Vorrichtung zur Fokuskontrolle in einem Mikroskop nach Anspruch 1, **dadurch gekennzeichnet, dass** das transparente optische Bauelement (4) die Form einer Plänplatte, eines Würfels, eines Quaders oder eines Zylinders hat und dass das transparente optische Bauelement (4) über einen zentral gesteuerten Motor, vorzugsweise einen Schrittmotor, verfügt.

**3.** Vorrichtung zur Fokuskontrolle in einem Mikroskop nach Anspruch 1 und 2, **dadurch gekennzeichnet, dass** zur digitalen Bilgebung eine Laserscan-Einrichtung im Haupistrahtengang hinter dem Hauptstrahlteiler (6) angeordnet ist.

**4.** Vorrichtung zur Fvkuskontrolle in einem Mikroskop nach anspruch 1 und 2, **dadurch gekennzeichnet, dass** zur digitalen Bildgebung eine CCD-Matrix (16) als Empfänger im Strahlengang angeordnet ist.

**5.** Verfahren zur Fokuskontrolle in einem Mikroskop mit digitaler Bildgebung, mit einem vor einem im. Strahlengang angeordneten Hauptstrahlteiler (6) vargesehenen parallelen Beleuchtungsstrahlengang (3) und einem transparenten optischen Bauelement (4) mit parallel zueinander liegenden Strahleintritts- und Strahlaustrittsflächen im Bereich dieses parallelen Beleuchtungsstrahlengangs (3) **dadurch gekennzeichnet, daß** die für die Fokuskontrolle erforderlichen Bilder bei einem hohen Zoom aufgenommen werden,

daß ein erstes Bild der interessierenden Objektdaten bei einem um den Winkel +alpha gedrehten transparenten optischen Bauelement (4) aufgenommen wird, daß ein zweites Bild der interessierenden Objektdaten bei einem um den Winkel -alpha gedrehten transparenten optischen Bauelement (4) aufgenommen wird,

daß die beiden Bilder bezüglich ihrer Ausleuchiung- und Helligkeitsunterschiede ausgeglichen werden, und daß von einer zentralen Steuereinheit erstes und zweites Bild durch pixelweises Verschieben auf Korrelation der Bildinhalte geprüft werden, indem verschoben wird bis die Korrelation ein Maximum aufweist und aus dem Wert für die Verschiebung ein Wert für die Abweichung von der Fokusebene bestimmt wird.

**6.** Verfahren zur Fokuskontrolle in einem Mikroskop nach Anspruch 5, **dadurch gekennzeichnet, daß** ein drittes Bild bei einem um den Winkel + alpha gedrehten Baulelement aufgenommen wird und der Mittelwert des ersten und dritten Bildes mit dem zweiten Bild durch pixelweises Verschieben auf Korrlkation der Bildinhalte geprüft wird.

**7.** Verfahren zur Fokuskontrolle in einem Mikroskop nach Anspruch 5 bis 6, **dadurch** gekenntzeichnet, dass der Winkel $\alpha$ einen Wert von ca. 20° aufweist, so dass der Schwerpunkt des Beleuchtungslichtes (1) in der Objektivpupille ca. um den halben Radius der Objektivpupille verschoben werden kann und dass die Bedingung. $\alpha_1 = -\alpha_2$ gilt.

**8.** Verfahren zur Fokuskontrolle in einem Mikroskop nach Anspruch 5 und 7, **dadurch gekennzeichnet, dass** der Ausgleich der Ausleuchtungs- und Helligkeitsunterschiede und die Korrelation der Bildinhalte der Bilder derart erfolgt, dass bei beiden Bildern die Ausleuchtungsunterschiede zwischen rechtem und linkem Bildrand durch Mittung eines Bereiches von etwa

10 - 15 Pixel mathematisch ausgeglichen werden, dass bei beiden korrigierten Bildet die minimale und maximale Helligkeit ermittelt und die Bilder damit normiert werden, dass die Inhalte dieser ausleuchtungskorrigierten und normierten Bilder, für jede in Pixetschritten erfolgte Verschiebung $\triangle$s pixelweise voneinander subtrahiert werden und dass die Summe der Quadrate der jeweiligen Differenzwerte für jede Verschiebung $\triangle$s als eine Fehlersumme ermittelt wird.

**9.** Verfahren zur Fokuskontrolle in einem Mikroskop nach Anspruch 5 bis 8, **dadurch gekennzeichnet, dass** vor dem Ausgleichen der Ausleuchtungsunterschiede von den Bildinhalten ein spaltenweiser Mittelwert gebildet wird.

**10.** Verfahren zur Fokuskontrolle in einem Mikroskop nach Anspruch 5 bis 9, **dadurch gekennzeichnet, dass** die pixelweise Subtraktion der Inhalte der ausleuchtungskorrigierten und normierten Bilder für Verschiebungen $\triangle$s in einem Bereich bis etwa 10 Pixel in jede Richtung erfolgt.

**11.** Verfahren zur Fokuskontrolle in einem Mikroskop nach Anspruch 5 bis 10, **dadurch gekennzeichnet, dass** der Ort des Minimums aus dem Verlauf der Fehlersumme, die in Nähe des Minimums in sehr guter Näherung einer Parabel entspricht, auf Subpixel genau interpoliert wird.

**12.** Venahren zur Fokuskontrolle in einem Mikroskop nach Anspruch 5 bis 11, **dadurch gekennzeichnet, dass** für Bilder, bei denen die Verdrehung des transparenten optischen Bauelementes (4) zu einer Verschiebung des Strahlenbündels (9a nach 9b) in einem Winkel $\beta$ zur Hauptscan- oder Hauptbildrichtung führt, die Überprüfung auf Korrelation der Bildinhalte in Richtung der Strahlverschiebung ebenfalls durch pixelleeises Verschieben erfolgt, allerdings getrennt in Richtung der Hauptsctan- oder Hauptbildrichtung und in der dazu senkrechten Richtung der Bildebene, dass der Ausgleich der Austeuchtüngs- und Helligkeitsunterschiede als auch die pixelweise Subtraktion für jede in Pixelschritten erfolgte Verschiebung $\triangle$s, getrennt in Richtung der Hauptscan- oder Hauptbildrichtung und in der dazu senkrechten Richtung der Bildebene erfolgt, dass mit Hilfe der Ergebnisse der in den beiden Richtungen erfolgten Ermittlung der Verschiebung $\triangle$s unter Anwendung des Satzes des Pythagoras die Verschiebung $\triangle$s$_{Res}$ in Richtung des Winkels $\beta$ ermittelt wird, dass die Verschiebung $\triangle$s, bei der die

Fehlersumme ein Minimum aufweist, als der Ort bester Übereinstimmung auf Subpixel genau interpoliert wird und dass aus dieser Verschiebung Δs unter Berücksichtigung der gegebenen Ausgangswerte ein Wert für die Abweichung Δz von der optimalen Fokusebene bestimmt wird.

## Claims

1. Device for focus monitoring in a microscope having digital image generation, in which a parallel illumination beam path (3) is provided in front of a main beam splitter (6) which is disposed in the beam path and a transparent optical component (4) having mutually parallel beam entrance and exit surfaces is disposed in the region of this parallel illumination beam path (3) in front of the main beam splitter (6), **characterised in that**

   - the perpendicular bisector of the beam entrance surface of the transparent optical component (4) lies in parallel with the centroid of the illumination light(3),
   - this transparent optical component (4) is rotatably mounted and during rotation the perpendicular bisector of the beam entrance surface includes an angle $\alpha$ with the centroid of the illumination light,
   - the axis of rotation (5) of this transparent optical component (4) is preferably located in relation to the sample such that during rotation a displacement of the beam bundle is performed in the main scanning direction or main image direction and
   - a central control and evaluation unit is provided for the purpose of controlling the transparent optical component, processing the recorded images, acquiring all output data and calculating and evaluating the results.

2. Device for focus monitoring in a microscope as claimed in claim 1, **characterised in that** the transparent optical component (4) has the shape of a plane plate, a cube, a square or a cylinder and **in that** the transparent optical component (4) has a centrally controlled motor, preferably a stepping motor.

3. Device for focus monitoring in a microscope as claimed in claim 1 and 2, **characterised in that** for the purpose of digital image generation a laser scanning device is disposed in the main beam path behind the main beam splitter (6).

4. Device for focus monitoring in a microscope as claimed in claim 1 and 2, **characterised in that** for the purpose of digital image generation a CCD matrix (16) is disposed as a receiver in the beam path.

5. Method of focus monitoring in a microscope with digital image generation, having a parallel illumination beam path (3) which is provided in front of a main beam splitter (6) disposed in the beam path, and having a transparent optical component (4) having mutually parallel beam entrance and exit surfaces in the region of this parallel illumination beam path (3), **characterised in that**
the images required for focus monitoring are recorded at a high zoom,
a first image of the object data of interest is recorded with a transparent optical component (4) which is rotated through the angle $+\alpha$,
a second image of the object data of interest is recorded with a transparent optical component (4) which is rotated through the angle $-\alpha$,
the two images are compensated in relation to their differences in illumination and brightness,
and a first and second image are checked by a central control unit for correlation of the image contents by means of pixel-by-pixel displacement, **in that** displacement is performed until the correlation is at a maximum and a value for the deviation from the focal plane is determined from the value of the displacement.

6. Method of focus monitoring in a microscope as claimed in claim 5, **characterised in that** a third image is recorded with a component which is rotated through the angle +a and the average value of the first and third image is checked for correlation of the image contents with the second image by means of pixel-by-pixel displacement.

7. Method of focus monitoring in a microscope as claimed in claim 5 to 6, **characterised in that** the angle $\alpha$ has a value of ca. 20°, so that the centroid of the illumination light (1) in the objective pupil can be displaced ca. by half the radius of the objective pupil and that the condition $\alpha_1 = -\alpha_2$ applies.

8. Method of focus monitoring in a microscope as claimed in claim 5 and 7, **characterised in that** the compensation of the differences in illumination and brightness and the correlation of the image contents of the images are performed in such a manner that in the two images the differences in illumination between the right-hand and lefthand image border are compensated mathematically by averaging a region of about 10-15 pixels, **in that** in the two corrected images the minimum and maximum brightness is determined and the images are thus scaled, **in that** the contents of these images which are corrected in terms of illumination and are scaled are subtracted one from the other pixel-by-pixel for each displacement $\triangle$s performed in pixel steps and **in that** the sum of the squares of the respective difference values is determined for each displacement $\triangle s$ as an error sum.

9. Method of focus monitoring in a microscope as claimed in claim 5 to 8, **characterised in that** prior to compensating the differences in illumination of the image contents an average column value is formed.

10. Method of focus monitoring in a microscope as claimed in claim 5 to 9, **characterised in that** the pixel-by-pixel subtraction of the contents of the images which are corrected in terms of illumination and are scaled is performed for displacements $\Delta s$ in a range up to about 10 pixels in each direction.

11. Method of focus monitoring in a microscope as claimed in claim 5 to 10, **characterised in that** the location of the minimum is interpolated precisely to subpixels from the progression of the error sum which in proximity to the minimum corresponds in close approximation to a parabola.

12. Method of focus monitoring in a microscope as claimed in claim 5 to 11, **characterised in that** for images, in which the rotation of the transparent optical component (4) leads to a displxement of the beam bundle (9a to 9b) at an angle $\beta$ with respect to the main scanning direction or main image direction, the image contents are checked for correlation in the direction of the beam displacement likewise by means of pixel-by-pixel displacement, but separately in the direction of the main scanning direction or main image direction and in the direction of the image plane which is perpendicular thereto, **in that** the compensation of the differences in illumination and brightness as well as the pixel-by-pixel subtraction are performed for each displacement $\Delta s$ performed in pixel steps, separately in the direction of the main scanning direction or main image direction and in the direction of the image plane perpendicular thereto, **in that** with the aid of the results of the determination of the displacement $\Delta s$ as performed in the two directions the displacement $\Delta s_{Res}$ is determined in the direction of the angle $\beta$ using Pythagoras' theorem, **in that** the displacement $\Delta s$, at which the error sum is at a minimum, is interpolated precisely to subpixels as the location of best match and **in that** taking account of the given output values a value for the deviation $\Delta z$ from the optimum focal plane is determined from this displacement $\Delta s$.

**Revendications**

1. Dispositif pour le contrôle de la mise au point dans un microscope à imagerie numérique, sur lequel un trajet parallèle de faisceau d'éclairage (3) est présent devant un diviseur de faisceau principal (6) disposé dans le trajet de faisceau et un composant (4) optique transparent avec des surfaces d'entrée et de sortie de faisceau parallèles entre elles est disposé dans la zone de ce trajet parallèle de faisceau d'éclairage (3) devant le diviseur de faisceau principal (6) **caractérisé en ce que**,

- la médiatrice de la surface d'entrée du faisceau du composant (4) optique transparent est parallèle au faisceau centroïde de la lumière d'éclairage (3),
- **en ce que** ce composant (4) optique transparent est logé de façon rotative et la médiatrice de la surface d'entrée du faisceau forme en cas de rotation un angle $\alpha$ avec le faisceau centroïde de la lumière d'éclairage,
- **en ce que** l'axe de rotation (5) de ce composant (4) optique transparent est disposé par rapport à l'échantillon de préférence de telle sorte que, en cas de rotation, on a un décalage du faisceau de rayons dans la direction de balayage principale ou la direction d'image principale et
- une unité centrale de commande et d'analyse est présente pour la commande du composant optique transparent, pour le traitement des images enregistrées, pour la saisie de toutes les données de départ ainsi que pour le calcul et l'analyse des résultats.

2. Dispositif pour le contrôle de la mise au point dans un microscope selon la revendication 1, **caractérisé en ce que** le composant (4) optique transparent a la forme d'une plaque plane, d'un dé, d'un parallélépipède ou d'un cylindre et **en ce que** le composant (4) optique transparent dispose d'un moteur à commande centrale, de préférence un moteur pas à pas.

3. Dispositif pour le contrôle de la mise au point dans un microscope selon les revendications 1 et 2, **caractérisé en ce qu'**un dispositif à balayage par laser est disposé dans le trajet de faisceau principal derrière le diviseur de faisceau principal (6) pour l'imagerie numérique.

4. Dispositif pour le contrôle de la mise au point dans un microscope selon les revendications 1 et 2, **caractérisé en ce qu'**une matrice CCD (16) en tant que récepteur est disposée dans le trajet du faisceau pour l'imagerie numérique.

5. Procédé pour le contrôle de la mise au point dans un microscope à imagerie numérique, comprenant un trajet des rayons d'éclairage (3) parallèle prévu devant un diviseur de faisceau principal (6) disposé dans le trajet des rayons et un composant (4) optique transparent avec des surfaces d'entrée et de sortie de faisceau parallèles entre elles dans la zone de ce trajet parallèle de faisceau d'éclairage (3), **caractérisé en ce que** les images nécessaires pour le contrôle de la mise au point sont enregistrées avec un zoom élevé,

en ce qu'une première image des données d'objet intéressantes est enregistrée avec un composant (4) optique transparent tourné de l'angle +alpha,

en ce qu'une seconde image des données d'objet intéressantes est enregistrée avec un composant (4) optique transparent tourné de l'angle -alpha,

**en ce que** les deux images sont équilibrées en ce qui concerne leur différence d'illumination et de luminosité,

et **en ce qu'**une unité de commande centrale contrôle la première et la seconde images par un décalage pixel par pixel au niveau de la corrélation des contenus d'image en décalant jusqu'à ce que la corrélation présente un maximum et qu'une valeur pour l'écart par rapport au plan focal soit déterminée à partir de la valeur pour le décalage.

6. Procédé pour le contrôle de la mise au point dans un microscope selon la revendication 5, **caractérisé en ce qu'**une troisième image est enregistrée avec un composant tourné de l'angle + alpha et **en ce que** la valeur moyenne de la première et de la troisième images est testée avec la seconde image par décalage pixel par pixel au niveau de la corrélation des contenus d'image.

7. Procédé pour le contrôle de la mise au point dans un microscope selon les revendications 5 et 6, **caractérisé en ce que** l'angle $\alpha$ présente une valeur d'environ 20°, de sorte que le centre de gravité de la lumière d'éclairage (1) dans la pupille d'objectif peut être décalé d'environ du demi-rayon de la pupille d'objectif et que la condition $\alpha_1 = \alpha_2$ est applicable.

8. Procédé pour le contrôle de la mise au point dans un microscope selon les revendications 5 et 7, **caractérisé en ce que** la compensation des différences d'illumination et de luminosité et la corrélation des contenus d'image des images s'effectue de telle sorte, sur les deux images, les différences d'illumination entre le bord d'image droit et le bord d'image gauche sont compensées mathématiquement par le calcul de la moyenne d'une zone d'environ 10 à 15 par pixels, **en ce que** la luminosité minimale et la luminosité maximale sont déterminées sur les deux images corrigées et les images sont ainsi normalisées, **en ce que** les contenus de ces images corrigées au niveau de l'illumination et normalisées sont soustraits les uns des autres pixel par pixel pour chaque décalage $\triangle$s effectué pixel par pixel et **en ce que** la somme des carrés des différences respectives est déterminée pour chaque décalage $\triangle$s sous la forme d'une somme d'erreurs.

9. Procédé pour le contrôle de la mise au point d'un microscope selon les revendications 5 à 8, **caractérisé en ce que**, avant la compensation des différences d'illumination, on forme une valeur moyenne colonne par colonne des contenus d'image.

10. Procédé pour le contrôle de la mise au point dans un microscope selon les revendications 5 à 9, **caractérisé en ce que** la soustraction pixel par pixel des contenus des images corrigées au niveau de l'illumination et normalisées s'effectue pour des décalages $\triangle$s dans une plage allant jusqu'à environ 10 pixels dans chaque direction.

11. Procédé pour le contrôle de la mise au point dans un microscope selon les revendications 5 à 10, **caractérisé en ce que** l'emplacement du minimum est interpolé à un sous-pixel près à partir de la courbe de la somme d'erreurs qui correspond à proximité du minimum avec une très bonne approximation à une parabole.

12. Procédé pour le contrôle de la mise au point dans un microscope selon les revendications 5 à 11, **caractérisé en ce que**, pour les images, pour lesquelles la rotation du composant (4) optique transparent entraîne un décalage du faisceau de rayons (9a vers 9b) dans un angle $\beta$ par rapport à la direction de balayage principale ou la direction d'image principale, le contrôle au niveau de la corrélation des contenus d'images en direction du décalage du faisceau s'effectue également par décalage pixel par pixel, mais séparément en direction du sens de balayage principal ou du sens d'image principal et dans la direction, perpendiculaire à celle-ci du plan d'image, **en ce que** la compensation des différences d'illumination et de luminosité de même que la soustraction pixel par pixel s'effectuent pour chaque décalage $\triangle$s effectué pixel par pixel, séparément en direction du sens de balayage principal ou du sens d'image principal et dans la direction, perpendiculaire à celle-ci, du plan d'image, **en ce que**, à l'aide des résultats du calcul effectué dans les deux directions du décalage $\Delta$s par application du théorème de Pythagore, on détermine le décalage $\Delta s_{Res}$ en direction de l'angle $\beta$, **en ce que** le décalage $\Delta$s, pour lequel la somme d'erreurs présente un minimum, est interpolé en tant qu'emplacement de la meilleure concordance au sous-pixel près et **en ce que**, à partir de ce décalage $\Delta$s et en tenant compte des valeurs de départ données, on détermine une valeur pour l'écart $\Delta$z par rapport au plan focal optimal.

15

14

5

13

6

7

1

2

4

3

8

9b

9a

10

11

12

y

x

Figur 1

**a) Bildausschnitt der aufgenommenen Bilder: z. B. 512 x 16 Pixel**

**b) Spaltenweise Mittelwertbildung**

**c) Ausgleich von Ausleuchtungsunterschieden**

**d) Normieren der Bilder**

**e) Subtraktion der Bildinhalte bei pixelweisem Verschieben**

-3 Pixel    0 Pixel    +3 Pixel

Figur 2

**Verschiebung um –3 Pixel**

gegeneinander
verschobene
Bildinhalte

Differenz der
Bildinhalte

## Figur 3

**Verschiebung um 0 Pixel**

Bildinhalte mit
bester
Übereinstimmung

Bilder shadingkorrigiert und
normiert

Differenz
der
Bildinhalte

## Figur 4

**Verschiebung um +3 Pixel**

**Summe der Quadrate der Differenzwerte in Abhängigkeit von der Pixelverschiebung**

**Das Minimum ist hier geringfügig von 0 in Richtung +1 verschoben**

**1 Pixel entspricht 0.47 µm Defokussierung**

Defokussierung: 0.03µm

**Figur 5**

Figur 6